# EUROPÄISCHE PATENTSCHRIFT

(11) **EP 3 781 380 B1**
(45) Veröffentlichungstag und Bekanntmachung des Hinweises auf die Patenterteilung: **18.10.2023**
(21) Anmeldenummer: 20734736.0
(22) Anmeldetag: 25.06.2020
(51) Int. Cl.: B29C 45/14

(54) **ELEKTRISCHE ODER ELEKTRONISCHE BAUGRUPPE SOWIE VERFAHREN ZUR HERSTELLUNG EINES ELEKTRISCHEN ODER ELEKTRONISCHEN BAUTEILS**
ELECTRICAL OR ELECTRONIC ASSEMBLY AND METHOD FOR PRODUCING AN ELECTRICAL OR ELECTRONIC COMPONENT
MODULE ÉLECTRIQUE OU ÉLECTRONIQUE AINSI QUE PROCÉDÉ DE PRODUCTION D'UNE PIÈCE ÉLECTRIQUE OU ÉLECTRONIQUE

(30) Priorität: 02.07.2019 DE 102019117834
(43) Veröffentlichungstag der Anmeldung: 24.02.2021
(73) Patentinhaber: Kolektor Mobility d.o.o., 5280 Idrija (SI)
(72) Erfinder: DRMOTA PETRIC, Ana, 5280 Idrija (SI); JEREB, Zmago, 5280 Idrija (SI); KUMAR, Ludvik, 1371 Logatec (SI)
(74) Vertreter: Grättinger Möhring von Poschinger Patentanwälte Partnerschaft mbB
(86) Internationale Anmeldenummer: PCT/EP2020/067843
(87) Internationale Veröffentlichungsnummer: WO 2021/001253

(56) Entgegenhaltungen:
- EP-A2- 0 714 227
- WO-A1-2014/156988

## Beschreibung

Die vorliegende Erfindung betrifft ein Verfahren zur Herstellung eines elektrischen oder elektronischen Bauteils, welches ein Leiterelement und eine Kunststoffstruktur umfasst, wobei das Leiterelement zwei Kontaktstellen und einen zwischen diesen angeordneten, durch eine Mehrzahl von Umfangsflächen begrenzten Längsabschnitt aufweist und wobei ferner die Kunststoffstruktur dergestalt fest mit dem Leiterelement verbunden ist, dass sie dieses innerhalb eines dessen Längsabschnitt überlappenden Umspritzabschnitts entlang des gesamten Umfangs umhüllt. Weiterhin betrifft die vorliegende Erfindung eine elektrische oder elektronische Baugruppe mit einem insbesondere unter Anwendung eines solchen Verfahrens hergestellten elektrischen oder elektronischen Bauteil sowie einer mit dem Leiterelement kontaktierten und von der Kunststoffstruktur zumindest teilweise umhüllten elektrischen oder elektronischen Funktionseinheit.

Eine besondere Herausforderung bei der Herstellung vorstehend genannter Bauteile und Baugruppen liegt darin, die Verbindung zwischen dem Leiterelement und der dieses teilweise umhüllenden Kunststoffstruktur derart auszugestalten, dass sie hohen Anforderungen an Robustheit, Zuverlässigkeit und dauerhafter Dichtigkeit gegenüber gasförmigen und flüssigen Medien genügt. Ganz besonders problematisch sind insoweit in Kraftfahrzeugen zu verbauende Bauteile und Baugruppen, weil sie einerseits besonders leicht, kompakt und kostengünstig herstellbar sein müssen, auf der andern Seite jedoch aufgrund von Schwingungen, Vibrationen und sonstigen Erschütterungen einer ganz besonders harten Beanspruchung unterliegen.

Im Stand der Technik sind verschiedene Ansätze diskutiert worden, welche die vorstehende Problematik entschärfen bzw. lösen sollen:
EP 2 307 187 B1 schlägt beispielsweise einen Bauteilverbund vor, bei welchem die Oberfläche eines ersten, aus einer Aluminiumlegierung bestehenden Bauteils vor dem Anspritzen eines aus einem thermoplastischen Kunststoff bestehenden zweiten Bauteils unter Einsatz von elektromagnetischer Strahlung derart behandelt wird, dass eine Oberflächenstruktur resultiert, die neben einer Mikrostruktur eine Nanostruktur aufweist. Eine derartige Oberflächenstrukturierung des ersten Bauteils soll eine verbesserte Haftung zwischen den beiden Bauteilen des Bauteilverbunds gewährleisten, um eine erhöhte Festigkeit und Dichtigkeit zu erreichen.

Gemäß der US 2012/0009739 A1, welche sich mit der Herstellung von Halbleiter-Chips befasst, soll für eine gute Haftung der aus einem Polymermaterial bestehenden Umspritzung an metallischen Leitern in die zunächst glatte Oberfläche von letzteren mittels Laserbehandlung ein Muster aus punktförmigen Strukturen mit jeweils einem gegenüber der ursprünglichen Oberfläche vertieften Zentrum und einem dieses umgebenden, gegenüber der ursprünglichen Oberfläche erhabenen Ring eingebracht werden.

Im Hinblick auf eine angestrebte Verbesserung der Reibeigenschaften eines elektromechanischen Bauelements bzw. der Reflexionseigenschaften eines elektrooptischen Bauelements schlägt die WO 2011/098256 A2 mit den Bearbeitungsverfahren Schleifen, Strahlen und Walzen noch weitere Möglichkeiten zur Feinstrukturierung der Oberfläche von Metallblechen bzw. Bauteilen vor.

Die EP 0 714 227 A2 offenbart ein aus Kunststoff gespritztes Gehäuseteil mit starren, metallischen, eingespritzten Zuleitungen, welche eine Wand des Gehäuseteils durchqueren und zum Anbringen von Messfühlern dienen. Ausgehend von der Wand haben die Zuleitungen noch auf einem Teil ihrer Länge einen Mantel aus Kunststoff. Dieser besteht in einem ersten, an die durchquerte Wand des Gehäuseteils anschließenden Abschnitt aus dem thermoplastischen Kunststoff, aus dem das Gehäuse gespritzt ist, und in einem an den ersten Abschnitt anschließenden zweiten Abschnitt aus einem elastomeren Kunststoff. Die beiden Abschnitte des Mantels sind einstückig miteinander verbunden, und die ummantelten Zuleitungen sind im zweiten Abschnitt umgebogen. Der zweite Abschnitt des Mantels kann, um das Umbiegen der betreffenden Zuleitung zu erleichtern, eine Taille aufweisen, welche gebildet ist durch einer auf einer seiner Seiten ausgebildete, sich über die gesamte Breite erstreckende Rille und eine auf der gegenüberliegenden Seite parallel dazu vorgesehene Schwächung.

Die WO 2014/156988 A1 offenbart ein Verfahren zur Herstellung von Verbundwerkstoff-Formkörpern, mit dem die Haftfestigkeit verbessert werden kann. Bei dem Verfahren, bei dem ein Metallformkörper und ein Harzformkörper miteinander verklebt werden, wird eine Verklebungsfläche des Metallformkörpers mit einem Laserstrahl mit einem Laserfleckdurchmesser von 10-200pm bestrahlt, um eine Nut sowie entweder ein Ring mit einem Durchmesser von 20-1000pm oder eine Region mit ähnlicher Flächenausdehnung zu bilden. Das Verfahren zur Herstellung von Verbundwerkstoff-Formkörpern umfasst: einen ersten Schritt, bei dem eine erste Abtastung eine Nut bildet, so dass der Startpunkt und der Endpunkt der Laserbestrahlung miteinander verbunden sind, und eine Vielzahl von wiederholten Abtastungen einen von der Nut umschlossen Bereich bilden; einen zweiten Schritt, in dem der erste Schritt wiederholt wird, um eine Vielzahl von Bereichen zu bilden, die von Nuten umschlossen sind; und einen dritten Schritt, bei dem ein Formkörperabschnitt, der die Haftfläche mit den von Nuten umschlossenen Bereichen enthält, innerhalb einer Metallform positioniert wird und das Harz, das zum Harzformkörper wird, einem Einlegegussverfahren unterzogen wird.

Eine praxisgerechte, d. h. allen bestehenden Anforderungen genügende Lösung der oben dargelegten Problematik existiert noch nicht. So liegt der Erfindung die - durch miteinander konkurrierende Teilaspekte geprägte - Aufgabe zugrunde, einen Weg zur Herstellung eines eingangs angegebenen Bauteils bzw. eine Baugruppe der eingangs angegebenen Art aufzuzeigen, bei dem die Verbindung zwischen Leiterelement und Kunststoffstruktur auch unter extremen Belastungen höchsten Anforderungen an Robustheit, Zuverlässigkeit und dauerhafter Dichtigkeit gegenüber gasförmigen und flüssigen Medien genügt, wobei sich der zugehörige Herstellprozess zudem durch besonders niedrige Kosten und vergleichsweise kurze Prozesszeiten auszeichnen soll.

Diese Aufgabe wird hinsichtlich des Verfahrens zur Herstellung des elektrischen oder elektronischen Bauteils mit den Merkmalen des Anspruchs 1 und hinsichtlich der elektrischen oder elektronischen Baugruppe mit den Merkmalen des Anspruchs 8 gelöst.

Das erfindungsgemäße Verfahren zur Herstellung eines elektrischen oder elektronischen Bauteils der eingangs angegebenen Art umfasst dabei die folgenden Verfahrensschritte:
(A) Bereitstellen eines bandförmigen Metallsubstrats, umfassend eine Vielzahl von Leiterelementrohlingen und eine diese miteinander verbindende Trägerstruktur;
(B) Herstellen von rillenförmigen Vertiefungen auf allen Umfangsflächen der Leiterelementrohlinge jeweils auf einem sich innerhalb des Längsabschnitts des späteren Leiterelements erstreckenden Texturierungsabschnitt mit Hilfe von ein oder zwei Laserlichtquellen,
   wobei mit Hilfe einer einzigen Laserlichtquelle die rillenförmigen Vertiefungen auf mindestens zwei aneinander angrenzenden, eine gemeinsame Kante ausbildenden primären Umfangsflächen dergestalt hergestellt werden, dass sich eine Vielzahl der rillenförmigen Vertiefungen ununterbrochen durchgehend in die mindestens zwei primären Umfangsflächen hineinerstreckt, und eine der primären Umfangsflächen und eine weitere, sekundäre Umfangsfläche des Leiterelements dergestalt unter Ausbildung einer Kante aneinandergrenzen, dass sie einen Winkel kleiner 90° miteinander einschließen, wobei die rillenförmigen Vertiefungen der primären Umfangsfläche und die rillenförmigen Vertiefungen der sekundären Umfangsfläche in Querschnittsansicht (d. h. in einer Projektion in Längsrichtung des Leiterelements) einander überlappen;
(C) Separieren eines im Verfahrensschritt (B) bearbeiteten Leiterelementrohlings durch dessen Ablösung von der Trägerstruktur, insbesondere durch Stanzen;
(D) Umspritzen des sich aus Verfahrensschritt (C) ergebenden Leiterelements innerhalb des Umspritzabschnitts auf allen Umfangsflächen mit Kunststoff unter Ausbildung der Kunststoffstruktur, wobei sich der Kunststoff der Kunststoffstruktur in die von ihm überdeckten rillenförmigen Vertiefungen des Leiterelements hineinerstreckt.

Die Oberflächenstrukturierung der Leiterelementrohlinge in den Texturierungsabschnitten der späteren Leiterelemente im Verfahrensschritt (B) erfolgt demnach zu einem Zeitpunkt, wenn die einzelnen Leiterelementrohlinge (noch) Teil des bandförmigen Metallsubstrats sind, d. h. wenn die Leiterelementrohlinge noch durch die Trägerstruktur miteinander verbunden sind und somit bevor sie von der Trägerstruktur abgelöst werden. Indem im Verfahrensschritt (C) jeweils ein Leiterelement aus jeweils einem Leiterelementrohling des bandförmigen Metallsubstrats hervorgeht, weist bereits ein Leiterelementrohling die hier charakteristischen (im Zusammenhang mit dem Leiterelement definierten) Besonderheiten des späteren Leiterelements auf, nämlich Umfangsflächen sowie einen Längs-, Texturierungs- und Umspritzabschnitt. Das Metallsubstrat kann dabei insbesondere auf Kupfer, einer Kupfer-Legierung oder Edelstahl basieren und galvanotechnisch behandelt sein. Durch die optische Oberflächenstrukturierung der Leiterelementrohlinge noch während deren Einbindung in den Verbund des Metallsubstrats wird ermöglicht, die zu bearbeitenden Leiterelementrohlinge sehr einfach an den ein oder zwei Laserlichtquellen vorbeizuführen und zu positionieren, ohne jeden Leiterelementrohling einzeln greifen und positionieren zu müssen. Dadurch können komplexe und teure mechanische Greif- und Positionierungseinrichtungen überflüssig gemacht und kurze Prozesszeiten realisiert werden, was sich vorteilhaft in geringen Produktionskosten niederschlägt.

Durch - den Querschnitt des Leiterelementrohlings (im Texturierungsabschnitt des späteren Leiterelements) berücksichtigende - günstige Positionierung der Laserlichtquelle(n) relativ zur Lage des jeweils durch sie oberflächenbearbeiteten Leiterelementrohlings wird dabei ermöglicht, dass alle Umfangsflächen des betreffenden Leiterelementrohlings (im Texturierungsabschnitt des späteren Leiterelements) mit nur ein oder zwei Laserlichtquellen bearbeitet werden können, ohne den Leiterelementrohling während der Oberflächenbehandlung rotieren zu müssen.

Durch die Oberflächenstrukturierung ausnahmslos aller Umfangsflächen des Texturierungsabschnitts mit den rillenförmigen Vertiefungen, von denen sich zumindest ein Teil über mehrere an einer Kante zusammenstoßende Umfangsflächen erstreckt, wird die Grundlage für die Ausbildung einer extrem robusten, zuverlässigen und dauerhaft gas- und flüssigkeitsdichten Verbindung zwischen Leiterelement und Kunststoffstruktur gelegt. Entscheidend ist insoweit die jeweils durchgehend über eine Kante, an der zwei einander benachbarte Umfangsflächen des (späteren) Leiterelements aneinander angrenzen, hinweg durchgezogene, sich in die beiden betreffenden Umfangsflächen hinein erstreckende Ausführung der rillenförmigen Vertiefungen. Dadurch, dass nur ein oder zwei Laserlichtquellen benötigt werden, um alle Umfangsflächen des Texturierungsabschnitts zu bearbeiten, können dabei die notwendigen Werkzeuginvestition auf ein Minimum reduziert werden, was sich vorteilhaft auf die Herstellkosten auswirkt. Erst durch das synergistische Zusammenspiel der einzelnen Merkmale der Verfahrensschritte (A) bis (D) wird dabei die der Erfindung zugrunde liegenden und in ihren Teilaspekten widersprüchlich erscheinende Aufgabenstellung gelöst.

Die einzelnen Umfangsflächen, die planar aber auch gewölbt beschaffen sein können, sind dabei durch Kanten begrenzt, die sich dort ausbilden, wo zwei Umfangsflächen mit im Kantenbereich unterschiedlichen Tangentialebenen aneinandergrenzen. Um den charakteristischen Besonderheiten des erfindungsgemäßen Verfahrens gerecht zu werden, wird dabei zwischen primären und sekundären Umfangsflächen unterschieden, abhängig davon, unter welchen Umständen auf der jeweiligen Umfangsfläche die rillenförmigen Vertiefungen eingebracht werden: Bei primären Umfangsflächen werden die rillenförmigen Vertiefungen entweder von der ersten von zwei Laserlichtquellen eingebracht, oder - wenn im gesamten Verfahren nur eine einzige Laserlichtquelle zur Oberflächenbearbeitung eingesetzt wird - sie werden von der einzigen Laserlichtquelle eingebracht, während der betreffende Leiterelementrohling die Laserlichtquelle zum ersten Mal passiert. Bei sekundären Umfangsflächen werden die rillenförmigen Vertiefungen analog dazu entweder von der zweiten von zwei Laserlichtquellen eingebracht, oder - wenn im gesamten Verfahren nur eine einzige Laserlicht zur Oberflächenbearbeitung eingesetzt wird - sie werden von der einzigen Laserlichtquelle eingebracht, während der betreffende Leiterelementrohling die Laserlichtquelle zum zweiten Mal passiert. Auf die mit nur einer einzigen Laserlichtquelle auf dem gesamten Umfang des betreffenden Leiterelementrohlings erfolgende Oberflächenbearbeitung wird im Folgenden noch näher eingegangen.

Dass eine der primären Umfangsflächen und eine weitere, sekundäre Umfangsfläche des Leiterelements dergestalt unter Ausbildung einer Kante aneinandergrenzen, dass sie einen Winkel kleiner 90° miteinander einschließen, wobei die rillenförmigen Vertiefungen der primären Umfangsfläche und die rillenförmigen Vertiefungen der sekundären Umfangsfläche in Querschnittsansicht (d. h. in einer Projektion in Längsrichtung des Leiterelements) einander überlappen, bedeutet mit anderen Worten, dass an den Kanten, an denen eine primäre und eine sekundäre Umfangsfläche unter Ausbildung eines spitzen Winkels aneinandergrenzen, die rillenförmigen Vertiefungen der ersten und der zweiten Umfangsfläche ausreichend tief sind, um einander zu überlappen. Dadurch wird ermöglicht, das die Verbindung zwischen Leiterelement und Kunststoffstruktur auch und gerade im Bereich der betreffenden Kante trotz der exponierten Lage (und dem daraus resultierenden Kerb-Effekt) den höchsten Anforderungen an Robustheit, Zuverlässigkeit und dauerhafter Dichtigkeit gegenüber gasförmigen und flüssigen Medien genügt. Ermöglicht werden kann die Überlappung der rillenförmigen Vertiefungen von aneinander angrenzenden primären und sekundären Umfangsflächen insbesondere durch ausreichend kleine Dimensionierung der Eckradien der entsprechenden Kante oder durch eine Erhöhung der Eindringtiefe des Laserstrahls (z. B. durch einen steileren Eindring-/Auftreffwinkel oder eine verlängerte Einwirkzeit).

Vorsorglich ist, um Fehlvorstellungen zu vermeiden, darauf hinzuweisen, dass die im Rahmen der Definition und Erläuterung der Erfindung im Zusammenhang mit dem Leiterelement und den Kontaktstellen jeweils genannte Anzahl (z. B. ein Leiterelement, zwei Kontaktstellen) als eine Mindestanzahl zu verstehen ist. Bauteile und Baugruppen, die eine größere Anzahl dieser Komponenten aufweisen, sind ebenfalls durch diese Erfindung abgedeckt.

Eine bevorzugte Weiterbildung des Verfahrens zur Herstellung eines elektrischen oder elektronischen Bauteils ist dadurch gekennzeichnet, dass die rillenförmigen Vertiefungen eine Tiefe von 5 *µ*m bis 50 *µ*m und eine Breite von 5 *µ*m bis 40 *µ*m aufweisen. Besonders bevorzugt beträgt die Tiefe der rillenförmigen Vertiefungen 20 *µ*m bis 30 *µ*m und deren Breite 15 *µ*m bis 25 *µ*m. Die genannten Tiefen und Breiten ermöglichen dabei eine sehr vorteilhafte Verbindung zwischen Leiterelement und Kunststoffstruktur, welche durch einen besonders vorteilhaften Kompromiss zwischen Prozesszeit (die Prozesszeit steigt an mit steigender Tiefe und steigender Breite der rillenförmigen Vertiefungen), Anforderungen an die Laserlichtquellenleistung (die Anforderungen an und die Kosten für die Laserlichtquelle steigen mit der Tiefe und der Breite der rillenförmigen Vertiefungen), Dichtheit und Standfestigkeit der Verbindung von Leiterelement und Kunststoffstruktur sowie mechanischer Integrität des Leiterelements gekennzeichnet ist.

Gemäß einer anderen bevorzugten Weiterbildung der Erfindung ist das Verfahren zur Herstellung eines elektrischen oder elektronischen Bauteils dadurch gekennzeichnet, dass das Leiterelement im Texturierungsabschnitt einen polygonalen, einen kreisbogenförmigen oder einen sowohl polygonale als auch kreisbogenförmige Anteile vorweisenden Querschnitt aufweist. Wie bereits weiter oben ausgeführt, ist für die Ausbildung einer den hohen Anforderungen genügenden Verbindung zwischen Leiterelement und Kunststoffstruktur das Zusammenspiel zwischen Querschnitt des Leiterelementrohlings (bzw. des Leiterelements) und der relativen Position der ein oder zwei Laserlichtquellen zum jeweils oberflächenbearbeiteten Leiterelementrohling von Einfluss. Vor diesem Hintergrund erweist sich der genannte polygonale, kreisbogenförmige bzw. polygon-kreisbogenförmige Querschnitt des Leiterelements im Texturierungsabschnitt als besonders vorteilhaft.

Eine andere bevorzugte Weiterbildung des Verfahrens zur Herstellung eines elektrischen oder elektronischen Bauteils zeichnet sich dadurch aus, dass die rillenförmigen Vertiefungen Teil einer netz- oder gitterartigen Rillenstruktur sind, die Längs- und Querrillen aufweist. Die netz- bzw. gitterartige Rillenstruktur ermöglicht dabei die Ausbildung einer ganz besonders robusten, zuverlässigen und dauerhaft dichten Verbindung zwischen Leiterelement und Kunststoffstruktur, da sich durch die unterschiedliche Orientierung der Längs- und Querrillen eine stoffschlüssige Verbindung ausbildet, die - insbesondere im Vergleich zu einer Rillenstruktur mit ausschließlich parallel zueinander verlaufenden Vertiefungen - bezogen auf ihre Verbindungseigenschaften weniger stark von der Beanspruchungsrichtung abhängt und somit in höherem Maße isotrop ist, was abhängig von der spezifischen Anforderungssituation ein Vorteil sein kann.

Eine andere vorteilhafte Weiterbildung des Verfahrens zur Herstellung eines elektrischen oder elektronischen Bauteils ist dadurch gekennzeichnet, dass die rillenförmigen Vertiefungen in Verfahrensschritt (B) auf allen Umfangsflächen des Texturierungsabschnitts des Leiterelementrohlings nacheinander mit Hilfe von nur einer einzigen Laserlichtquelle hergestellt werden, wobei das bandförmige Metallsubstrat dergestalt schleifenartig verdreht geführt wird, dass der jeweilige Leiterelementrohling einmal mit seinen primären Umfangsflächen und einmal mit seinen übrigen, sekundären Umfangsflächen der Laserlichtquelle zugewandt an dieser vorbeigeführt wird. Der Leiterelementrohling wird somit jeweils zweimal an ein und derselben Laserlichtquelle vorbeigeführt und erfährt dabei - in zwei Schritten - die Oberflächenbearbeitung aller Umfangsflächen im Texturierungsabschnitt. Auf diese Weise kann erreicht werden, dass alle Umfangsflächen mit nur einer einzigen anstelle von zwei Laserlichtquelle oberflächenbearbeitbar sind, was sich in einer Reduktion der Investitions- und Wartungskosten der Produktionstechnik und somit letztlich in geringeren Kosten für das herzustellende Bauteil vorteilhaft niederschlägt.

In abermals bevorzugter Weiterbildung zeichnet sich das Verfahren zur Herstellung eines elektrischen oder elektronischen Bauteils dadurch aus, dass sich das aus Verfahrensschritt (C) ergebende Leiterelement an mindestens einer seiner Kontaktstellen mit einer elektrischen oder elektronischen Funktionseinheit kontaktiert wird und dass die elektrische oder elektronische Funktionseinheit während des Verfahrensschritts (D) zumindest teilweise mit Kunststoff umspritzt wird. Auf diese Weise wird die Herstellung einer komplexen Baugruppe ermöglicht, bei der die elektrische Funktionseinheit - und namentlich deren Kontaktierung mit dem Leiterelement - zumindest teilweise in die Kunststoffstruktur eingebettet ist, was der Integrität, der Robustheit sowie der Langzeitstabilität der Baugruppe in vorteilhafter Weise zugute kommen kann.

Wie weiter oben ausgeführt erstreckt sich die Erfindung nicht nur auf das bereits dargelegte Verfahren zur Herstellung eines elektrischen oder elektronischen Bauteils, sondern auch auf die elektrische oder elektronische Baugruppe selbst. Die erfindungsgemäße elektrische oder elektronische Baugruppe umfasst dabei eine elektrische oder elektronische Funktionseinheit, insbesondere eine Statoreinheit, ein Leiterelement und eine Kunststoffstruktur. Sie zeichnet sich durch die folgenden Merkmale aus:
- das Leiterelement weist zwei Kontaktstellen und einen zwischen diesen angeordneten, durch eine Mehrzahl von Umfangsflächen begrenzten Längsabschnitt auf; die elektrische oder elektronische Funktionseinheit ist (an einer der Kontaktstellen) mit dem Leiterelement kontaktiert;
- das Leiterelement weist auf allen Umfangsflächen eines sich innerhalb des Längsabschnitts erstreckenden Texturierungsabschnitts rillenförmige Vertiefungen auf, wobei sich eine Vielzahl der rillenförmigen Vertiefungen ununterbrochen durchgehend in mindestens zwei aneinander angrenzende, eine gemeinsame Kante ausbildende primäre Umfangsflächen hineinerstreckt und eine der primären Umfangsflächen und eine weitere, sekundäre Umfangsfläche des Leiterelements dergestalt unter Ausbildung einer Kante aneinandergrenzen, dass sie einen Winkel kleiner 90° miteinander einschließen, wobei die rillenförmigen Vertiefungen der primären Umfangsfläche und die rillenförmigen Vertiefungen der sekundären Umfangsfläche in Querschnittsansicht (d. h. in einer Projektion in Längsrichtung des Leiterelements) einander überlappen;
- die Kunststoffstruktur umhüllt zumindest teilweise die elektrische oder elektronische Funktionseinheit und ist fest mit dem Leiterelement verbunden, indem sie dieses innerhalb eines dessen Längsabschnitt überlappenden Umspritzabschnitts entlang des gesamten Umfangs umhüllt, wobei sich die Kunststoffstruktur in die von ihr überdeckten rillenförmigen Vertiefungen des Leiterelements hinein erstreckt.

Die ununterbrochenen, sich durchgehend in mindestens zwei aneinander angrenzende, eine gemeinsame Kante ausbildende Umfangsflächen hineinerstreckenden rillenförmigen Vertiefungen tragen dabei dazu bei, dass sich auch und gerade im Kantenbereich eine ganz besonders robuste, zuverlässige und dauerhaft dichte Verbindung zwischen Leiterelement und Kunststoffstruktur ausbildet, da somit auch im Kantenbereich der Feder-Nut-artige stoffschlüssige verbindungsförderliche Eingriff der Kunststoffstruktur in die Vertiefungen der Leiterelemente ermöglich wird.

Gemäß einer bevorzugten Weiterbildung der Erfindung ist die elektrische oder elektronische Baugruppe dadurch gekennzeichnet, dass die Funktionseinheit als Statoreinheit und die Baugruppe als Motorgehäuse einer Motor-Pumpen-Einheit ausgeführt ist, wobei die Motor-Pumpen-Einheit eine Rotoreinheit umfasst und geeignet ist ein Fluid zu fördern, wobei weiterhin die Statoreinheit nur teilweise von der Kunststoffstruktur umhüllt ist und in einem der Rotoreinheit zugewandten Bereich freiliegt, wobei dieser freiliegende Bereich der Statoreinheit sowie die Rotoreinheit dem geförderten Fluid ausgesetzt sind. Bei dieser Weiterbildung kommen die charakteristischen Merkmale und vorteilhaften Wirkungen im synergistischen Zusammenspiel in ganz besonderer Weise zum Tragen: Durch die Einbindung der Statoreinheit und des Leiterelements in die eine gemeinsame Kunststoffstruktur unter Ausbildung eines Motorgehäuses wird eine äußerst kompakte, toleranzarme sowie mechanisch stabile Komponente ermöglicht. Der Umstand, dass die Statoreinheit in einem fluidexponierten und der Rotoreinheit zugewandten Bereich freiliegt, ist dem Bestreben geschuldet, mit dem Ziel der Steigerung der Motor-Effizienz einen möglichst kleinen Spalt zwischen diesen beiden Bauteilen zu realisieren. Ermöglicht wird dies allerdings erst durch die robuste, zuverlässige und dauerhaft dichte Verbindung zwischen Leiterelement und Kunststoffstruktur, da durch sie dauerhaft verhindert werden kann, dass das von der Pumpe geförderte Fluid an der Grenzschicht zwischen Kunststoffstruktur und Leiterelement entlangkriecht und empfindliche elektronische und elektrische Vorrichtungen, mit denen das Leiterelement an seiner zweiten Kontaktstelle kontaktiert ist, erreicht und diese schädigt.

Die der Erfindung zugrundeliegenden Überlegungen lassen sich dabei ebenfalls mitsamt den ausgeführten Vorteilen auf ein elektrisches oder elektronisches Bauteil übertragen. Das Bauteil umfasst dabei ein zwei Kontaktstellen aufweisendes Leiterelement, wobei das Leiterelement zwischen den Kontaktstellen einen durch eine Mehrzahl von Umfangsflächen begrenzten Längsabschnitt aufweist, sowie eine Kunststoffstruktur, die fest mit dem Leiterelement verbunden ist und dieses Leiterelement innerhalb eines seinen Längsabschnitt überlappenden Umspritzabschnitts entlang des gesamten Umfangs umhüllt. Das Leiterelement weist dabei auf allen Umfangsflächen eines sich innerhalb des Längsabschnitts erstreckenden Texturierungsabschnitts rillenförmige Vertiefungen auf, wobei sich eine Vielzahl der rillenförmigen Vertiefungen ununterbrochen durchgehend in mindestens zwei aneinander angrenzende, eine gemeinsame Kante ausbildende Umfangsflächen hineinerstreckt, und wobei sich die Kunststoffstruktur in die von ihr überdeckten rillenförmigen Vertiefungen des Leiterelements hineinerstreckt.

Auch hier, d. h. in Beziehung zu den erfindungsgemäßen Erzeugnissen, gilt, dass die im Zusammenhang mit dem Leiterelement, den Kontaktstellen und der Funktionseinheit jeweils genannte Anzahl (z. B. ein Leiterelement, zwei Kontaktstellen, eine Funktionseinheit) dabei als eine Mindestanzahl zu verstehen ist. Bauteile und Baugruppen, die eine größere Anzahl dieser Komponenten aufweisen, sind ebenfalls durch diese Erfindung abgedeckt.

Nachfolgend werden mehrere Materialisierungsformen und Ausführungsbeispiele der Erfindung anhand der Zeichnung näher erläutert. Dabei zeigt
- Fig. 1a: in Draufsicht und
- Fig. 1b: in Schrägansicht ein bandförmiges Metallsubstrat mit mehreren gemäß Verfahrensschritt (B) des Anspruchs 1 oberflächenbehandelten Leiterelementrohlingen,
- Fig. 2: schematisch einen Querschnitt durch einen Leiterelementrohling nach den Figuren 1a und 1b im Texturierungsabschnitt sowie die beiden Positionen, von denen aus die Oberflächenbearbeitung durch die eine oder die zwei Laserlichtquellen erfolgt,
- Fig. 3: schematisch die Querschnitte verschiedener alternativ zu Fig. 2 ausgeführter Leiterelemente im jeweiligen Texturierungsabschnitt sowie die jeweiligen beiden Positionen von denen aus die Oberflächenbearbeitung durch die eine oder die zwei Laserlichtquellen erfolgt,
- Fig. 4: ein schleifenartig verdreht geführtes bandförmiges Metallsubstrat mitsamt einer einzigen Laserlichtquelle in Schrägansicht,
- Fig. 5: die Schnittansicht einer erfindungsgemäßen Baugruppe, welche Teil einer Motor-Pumpen-Einheit ist.

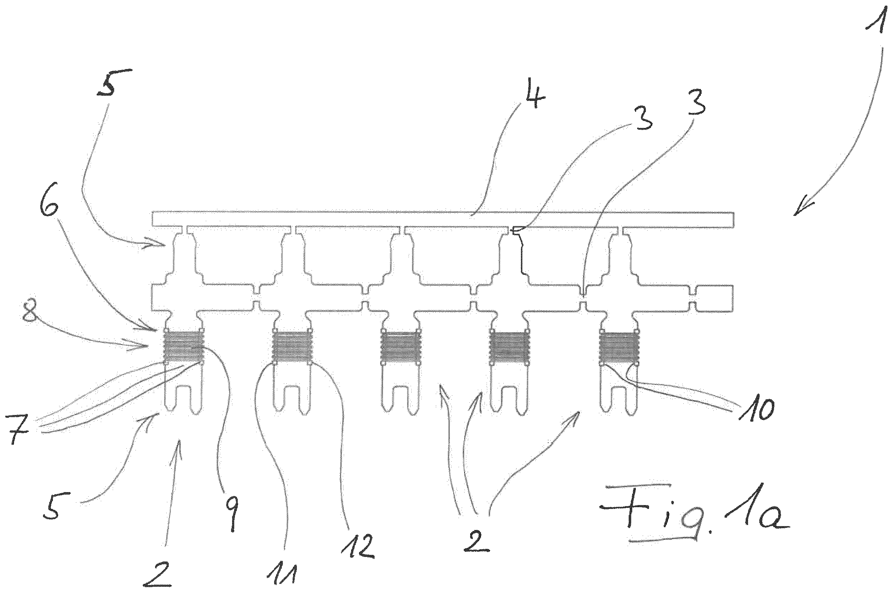

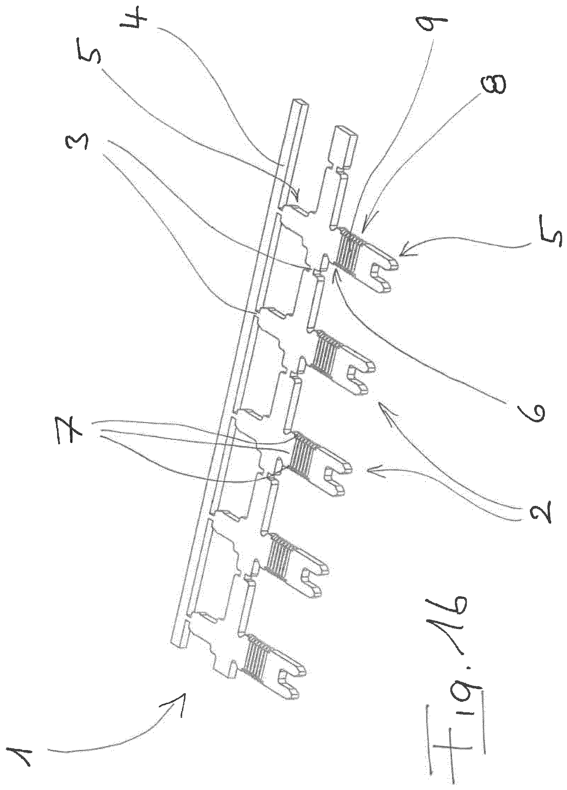

Fig. 1a und Fig. 1b veranschaulichen ein bandförmiges Metallsubstrat 1 mit einer Abfolge mehrerer identischer Leiterelementrohlinge 2. Diese sind über Brückenstege 3 sowohl untereinander als auch mit einer durchgehenden streifenförmigen Trägerstruktur 4 verbunden. Die Leiterelementrohlinge 2 weisen, ebenso wie die aus ihnen durch Vereinzelung (mittels Stanzung bzw. Abscheren) hervorgehenden Leiterelemente 2', im Wesentlichen endseitig zwei zur Kontaktierung angrenzender elektrischer Teile bestimmte und geeignete Kontaktstellen 5 auf.

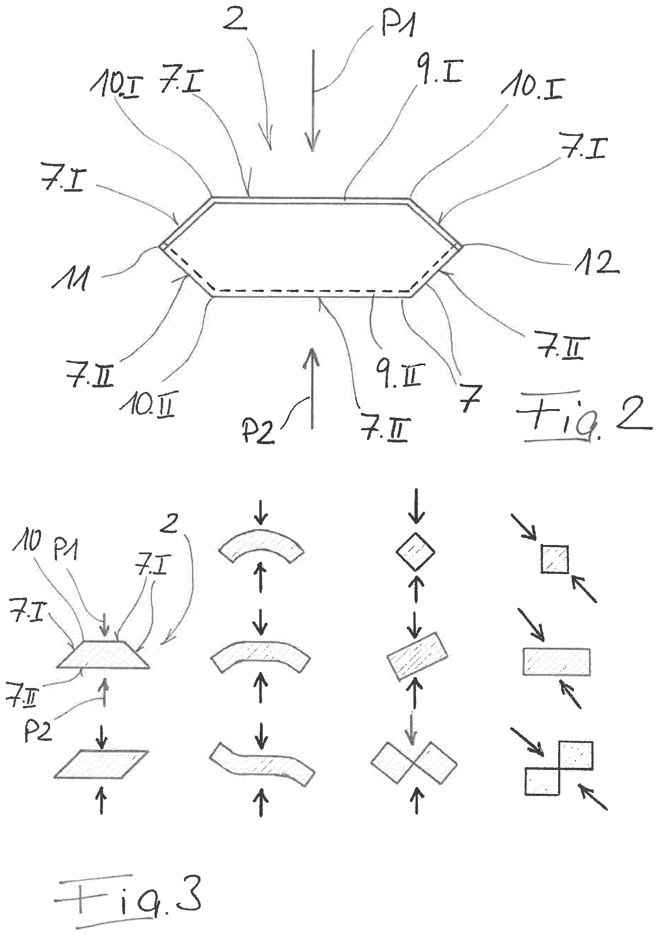

Jeder Leiterelementrohling 2 weist einen zwischen seinen beiden Kontaktstellen 5 angeordneten Längsabschnitt 6 mit einem polygonalen, nämlich einem flach-gestreckten 6-eckigen Querschnitt (vgl. Fig. 2) auf. In diesem Längsabschnitt 6 ist der Leiterelementrohling 2, mit anderen Worten, durch insgesamt sechs - in diesem Fall ebene - Umfangsflächen 7 begrenzt.

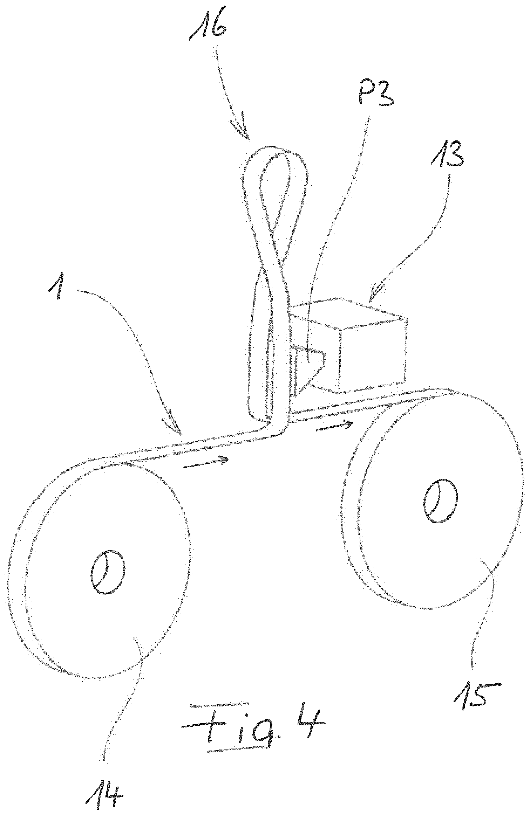

In einem innerhalb des Längsabschnitts 6 angeordneten Texturierungsabschnitt 8 weist der Leitersegmentrohling 2 auf seinen sämtlichen sechs Umfangsflächen 7 rillenförmige Vertiefungen 9 auf. Diese sind, je nach der individuellen Ausgestaltung des Verfahrens, unter Verwendung einer einzigen Laserlichtquelle (vgl. Fig. 4) oder aber zweier Laserlichtquellen hergestellt. Die beiden Pfeile P1 und P2 der Fig. 2 markieren dabei die Position(en) der einen oder aber zwei oberflächenbearbeitenden Laserlichtquelle(n) relativ zum Leiterelementrohling 2 bei der Texturierung der sechs Umfangsflächen 7. Unabhängig von der Anzahl der insgesamt verwendeten Laserlichtquellen gilt, dass die rillenförmigen Vertiefungen 9.1 auf den drei aneinandergrenzenden, insgesamt zwei gemeinsame Kanten 10.I ausbildenden primären Umfangsflächen 7.1 mit Hilfe nur einer einzigen, gemäß P1 positionierten Laserlichtquelle hergestellt wurden. Eine Vielzahl der rillenförmigen Vertiefungen 9.I erstreckt sich ununterbrochen durchgehend in die drei aneinander angrenzenden, insgesamt zwei gemeinsame Kanten 10.I ausbildenden primären Umfangsflächen 7.I hinein.

Die den drei primären Umfangsflächen 7.I gegenüberliegenden drei sekundären Umfangsflächen 7.II weisen dabei ebenfalls eine Vielzahl von rillenförmigen Vertiefungen 9.II auf, die sich ununterbrochen durchgehend in die drei aneinander angrenzenden, insgesamt zwei gemeinsame Kanten 10.II ausbildenden sekundären Umfangsflächen 7.II hineinerstrecken. An den beiden Kanten 11, 12 grenzen jeweils eine primäre Umfangsfläche 7.I und eine sekundäre Umfangsfläche 7.II aneinander und schließen - die entsprechenden Ebenen schneiden sich in Querschnittsansicht in einem Winkel von etwa 90° - einen etwa rechten Winkel miteinander ein. Die rillenförmigen Vertiefungen 9.I und 9.II der jeweiligen primären Umfangsflächen 7.I und sekundären Umfangsflächen 7.II überlappen sich dabei in Querschnittsansicht im Bereich der Kanten 11 und 12. Mit anderen Worten: Es münden - infolge ihre Tiefe - die rillenförmigen Vertiefungen 9.I in den beiden äußeren sekundären Umfangsflächen 7.II und die rillenförmigen Vertiefungen 9.II in den beiden äußeren primären Umfangsflächen 7.I. Wie dies in Fig. 2 veranschaulicht ist, müssen die rillenförmigen Vertiefungen 9.I und 9.II nicht zueinander fluchten, d. h. an den Kanten 11 und 12 ineinander übergehen; sie können vielmehr - müssen aber nicht - zueinander versetzt sein.

Fig. 3 stellt die Querschnitte einer Vielzahl anderer Leiterelementrohlinge 2 in deren jeweiligem Texturierungsabschnitt 8 - jeweils vor dem Einbringen der rillenförmigen Vertiefungen - dar, die sich je nach spezifischer Anforderungssituation als besonders vorteilhaft erweisen können. Gezeigt sind insbesondere Querschnitte in Form eines Trapezes, eines Parallelogramms, eines Kreisbogens, einer mehrfach abgewinkelten Platte, eines Quadrats, eines Rechtecks und eines Doppelrechtecks. Die beiden Pfeile P1 und P2 symbolisieren auch hier die jeweiligen Positionen der einen oder aber zwei oberflächenbearbeitenden Laserlichtquelle(n) relativ zum jeweiligen Leiterelementrohling 2. Aus Gründen der Übersichtlichkeit wurden die Bezugszeichen nur für einen der in Fig. 3 dargestellten Querschnitte eingezeichnet; selbstverständlich gelten die Bezugszeichen aber dennoch analog auch für die anderen Querschnitte der Fig. 3.

Fig. 4 veranschaulicht in Schrägansicht die schleifenartig verdrehte Führung eines (nur schematisch gezeigten) bandförmigen Metallsubstrats 1 gemäß Fig. 1a und Fig. 1b an einer einzigen Laserlichtquelle 13. Der Polyeder P3 markiert dabei jenen Bereich, in dem eine bestimmungsgemäße Oberflächenbearbeitung durch die Laserlichtquelle 13 im Rahmen des regulären Betriebs möglich ist. Die Bearbeitung der in das Metallsubstrat 1 eingebetteten Leiterelementrohlinge 2 (vgl. Fig. 1a und Fig. 1b) erfolgt, nachdem das Metallsubstrat 1 von einer ersten Rolle 14 abgewickelt und bevor es auf eine zweite Rolle 15 aufgewickelt wird. Das bandförmige Metallsubstrat 1 ist dabei dergestalt schleifenförmig verdreht in einer Schlaufe 16 geführt, dass jeder Leiterelementrohling 2 einmal mit seinen primären Umfangsflächen 7.I und einmal mit seinen sekundären Umfangsflächen 7.II der einen Laserlichtquelle 13 zugewandt an dieser vorbeigeführt wird (wobei die das Metallsubstrat 1 führende Führungsvorrichtung aus Gründen der Übersichtlichkeit nicht dargestellt ist). Damit wird erreicht, dass ein und dieselbe Laserlichtquelle 13 sowohl die primären Umfangsflächen 7.I als auch die sekundären Umfangsflächen 7.II oberflächenbearbeiten kann und somit auf eine zweite Laserlichtquelle verzichtet werden kann.

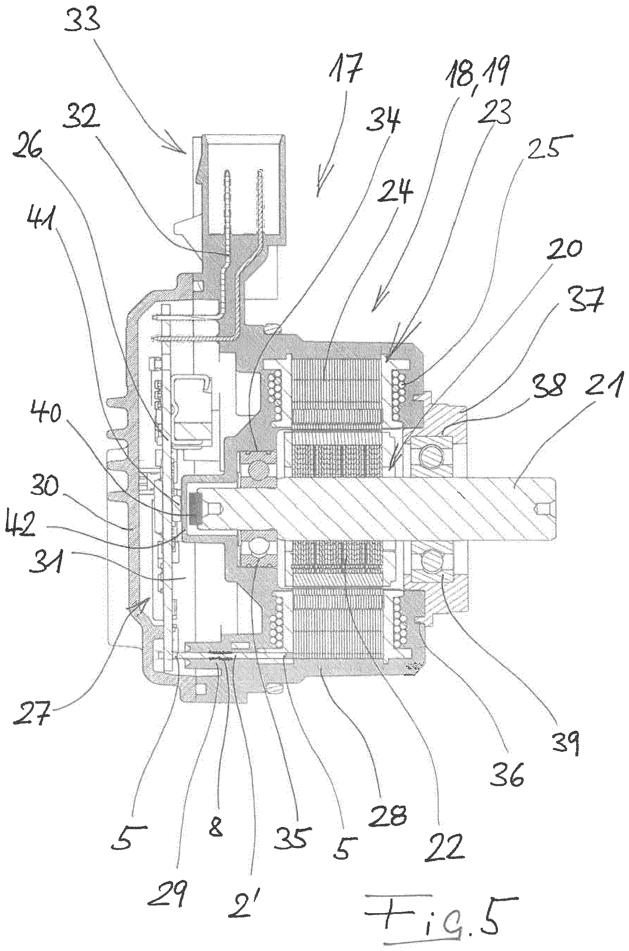

Fig. 5 stellt in Schnittansicht den Motorteil 17 einer zur Förderung eines Fluids geeigneten Motor-Pumpen-Einheit dar. Der gezeigte Motorteil umfasst eine Statorstruktur 18, die als erfindungsgemäße Baugruppe 19 ausgeführt ist, sowie eine darin drehbar aufgenommene Rotoreinheit 20. Die Rotoreinheit 20 umfasst in üblicher Weise eine - den Pumpenteil der Motor-Pumpen-Einheit antreibende - Welle 21 und einen mit dieser starr verbundenen Anker 22. Und die Statorstruktur 18 umfasst eine Statoreinheit 23, die in als solches üblicher Weise mehrere jeweils auf einen Statorkern 24 aufgesetzte Statorwicklungen 25 aufweist. Die Statorwicklungen 25 sind über (gemäß den Figuren 1 und 2 ausgeführte) Leiterelemente 2' - nur eines dieser Leiterelemente 2' ist gezeigt - mit der Platine 26 einer elektronischen Steuerung 27 kontaktiert.

Die Statorstruktur 18 umfasst weiterhin eine gehäuseartige Kunststoffstruktur 28, welche - in einer Spritzgießmaschine - an die vormontierte Einheit aus Statoreinheit 23 und mit deren Statorwicklungen 25 kontaktierend verbundenen Leiterelementen 2' angespritzt ist. Die Leiterelemente 2' sind nur auf einem Teil ihrer Länge (dem "Umspritzabschnitt" 29) in die Kunststoffstruktur 28 eingebettet, d. h. entlang ihres gesamten Umfangs umhüllt; sie stehen - zum Zwecke ihrer späteren Kontaktierung mit der Platine 26 an der betreffenden Kontaktstelle 5 - ein Stück weit aus der Kunststoffstruktur 28 heraus und ragen so in einen - durch einen Deckel 30 verschlossenen - Aufnahmeraum 31 für die Platine 26 hinein. In die Kunststoffstruktur 28 sind im Übrigen auch die Motoranschlüsse 32 eingebettet, welche sich, jeweils endseitig freiliegend, von einer Anschlussbuchse 33 bis in den Aufnahmeraum 31 für die Platine 26 hinein erstrecken.

An der Kunststoffstruktur 28 ist auch eine Aufnahme 34 für ein erstes Rotorlager 35 ausgebildet. Stirnseitig weist die Kunststoffstruktur 28 eine Zentrierung 36 für einen Lagerring 37 auf, in dessen Aufnahme 38 ein zweites Rotorlager 39 eingesetzt ist. In einem der Rotoreinheit 20 zugewandten Bereich liegt die Statoreinheit 23 frei, d. h. ist nicht mit Kunststoffstruktur 28 überzogen, so dass, ebenso wie die Rotoreinheit 20, dieser freiliegende Bereich der Statoreinheit 23 dem geförderten Fluid ausgesetzt ist. So kann Fluid unter der Kunststoffstruktur 28 an der Statoreinheit 23 entlang bis zu den Leiterelementen 2' kriechen.

Bei Spritzen der Kunststoffstruktur 28 dringt aber Schmelze in die rillenförmigen Vertiefungen 9, 9' der Leiterelemente 2' ein und bewirkt im Bereich des jeweiligen Umspritzabschnitts 29, nämlich an dem jeweiligen Texturierungsabschnitt 8 des betreffenden Leiterelements 2' eine zuverlässige dauerhafte Abdichtung des Aufnahmeraumes 31 für die Platine 26 gegenüber dem Aufnahmeraum für die Rotoreinheit 20.

Erkennbar ist in Fig. 5 auch der stirnseitig an der Rotorwelle 21 angeordnete Drehgeber 40, dem ein auf der Platine 26 angeordneter Aufnehmer 41 gegenübersteht. Die Dreh-Messung erfolgt berührungslos. Die an der Kunststoffstruktur 28 ausgeführte Trennwand 42 bewirkt auch hier eine hermetisch dichte Abkoppelung des Aufnahmeraumes 31 für die Platine 26 von dem Aufnahmeraum für die Rotoreinheit 20.

## Patentansprüche

1. Verfahren zur Herstellung eines elektrischen oder elektronischen Bauteils, welches ein Leiterelement (2') und eine Kunststoffstruktur (28) umfasst, wobei das Leiterelement (2') zwei Kontaktstellen (5) und einen zwischen diesen angeordneten, durch eine Mehrzahl von Umfangsflächen (7) begrenzten Längsabschnitt (6) aufweist und wobei ferner die Kunststoffstruktur (28) dergestalt fest mit dem Leiterelement (2') verbunden ist, dass sie dieses innerhalb eines dessen Längsabschnitt (6) überlappenden Umspritzabschnitts (29) entlang des gesamten Umfangs umhüllt, mit den folgenden Verfahrensschritten:
(a) Bereitstellen eines bandförmigen Metallsubstrats (1), umfassend eine Vielzahl von Leiterelementrohlingen (2) und eine diese miteinander verbindende Trägerstruktur (4);
(b) Herstellen von rillenförmigen Vertiefungen (9) auf allen Umfangsflächen (7) der Leiterelementrohlinge (2) jeweils auf einem sich innerhalb des Längsabschnitts (6) des späteren Leiterelements (2') erstreckenden Texturierungsabschnitt (8) mit Hilfe von ein oder zwei Laserlichtquellen (13),
wobei
- mit Hilfe einer einzigen Laserlichtquelle (13) die rillenförmigen Vertiefungen (9.I) auf mindestens zwei aneinander angrenzenden, eine gemeinsame Kante (10.I) ausbildenden primären Umfangsflächen (7.I) dergestalt hergestellt werden, dass sich eine Vielzahl der rillenförmigen Vertiefungen (9.I) ununterbrochen durchgehend in die mindestens zwei primären Umfangsflächen (7.I) hineinerstreckt, und
- eine der primären Umfangsflächen (7.I) und eine weitere, sekundäre Umfangsfläche (7.II) des Leiterelements (2') unter Ausbildung einer Kante (11, 12) aneinandergrenzen und sich in Querschnittsansicht in einem Winkel kleiner oder gleich 90° schneiden, wobei sich die rillenförmigen Vertiefungen (9.I, 9.II) der primären und der sekundären Umfangsfläche (7.I, 7.II) in Querschnittsansicht überlappen;
(c) Separieren eines im Verfahrensschritt (b) bearbeiteten Leiterelementrohlings (2) durch dessen Ablösung von der Trägerstruktur (4), insbesondere durch Stanzen;
(d) Umspritzen des sich aus Verfahrensschritt (c) ergebenden Leiterelements (2) innerhalb des Umspritzabschnitts (29) auf allen Umfangsflächen (7) mit Kunststoff unter Ausbildung der Kunststoffstruktur (28), wobei sich der Kunststoff der Kunststoffstruktur (28) in die von ihm überdeckten rillenförmigen Vertiefungen (9) des Leiterelements (2) hineinerstreckt.

2. Verfahren zur Herstellung eines elektrischen oder elektronischen Bauteils nach Anspruch 1, **dadurch gekennzeichnet, dass** die rillenförmigen Vertiefungen (9) eine Tiefe von 5 µm bis 50 µm und eine Breite von 5 µm bis 40 µm aufweisen.

3. Verfahren zur Herstellung eines elektrischen oder elektronischen Bauteils nach Anspruch 2, **dadurch gekennzeichnet, dass** die rillenförmigen Vertiefungen (9) eine Tiefe von 20 µm bis 30 µm und eine Breite von 15 µm bis 25 µm aufweisen.

4. Verfahren zur Herstellung eines elektrischen oder elektronischen Bauteils nach mindestens einem der vorangegangenen Ansprüche, **dadurch gekennzeichnet, dass** das Leiterelement (2') im Texturierungsabschnitt (8) einen polygonalen, einen kreisbogenförmigen oder einen sowohl polygonale als auch kreisbogenförmige Anteile vorweisenden Querschnitt aufweist.

5. Verfahren zur Herstellung eines elektrischen oder elektronischen Bauteils nach mindestens einem der vorangegangenen Ansprüche, **dadurch gekennzeichnet, dass** die rillenförmigen Vertiefungen (9) Teil einer netz- oder gitterartigen Rillenstruktur sind, die Längs- und Querrillen aufweist.

6. Verfahren zur Herstellung eines elektrischen oder elektronischen Bauteils nach mindestens einem der vorangegangenen Ansprüche, **dadurch gekennzeichnet, dass** die rillenförmigen Vertiefungen (9) in Verfahrensschritt (b) auf allen Umfangsflächen (7) des Texturierungsabschnitts (8) des Leiterelementrohlings (2) nacheinander mit Hilfe von nur einer Laserlichtquelle (13) hergestellt werden, wobei das bandförmige Metallsubstrat (1) dergestalt schleifenartig verdreht geführt wird, dass der jeweilige Leiterelementrohling (2) einmal mit seinen primären Umfangsflächen (7.I) und einmal mit seinen übrigen Umfangsflächen (7.II) der Laserlichtquelle (13) zugewandt an dieser vorbeigeführt wird.

7. Verfahren zur Herstellung eines elektrischen oder elektronischen Bauteils nach mindestens einem der vorangegangenen Ansprüche, **dadurch gekennzeichnet, dass** sich das aus Verfahrensschritt (c) ergebende Leiterelement (2') an mindestens einer seiner Kontaktstellen (5) mit einer elektrischen oder elektronischen Funktionseinheit kontaktiert wird, welche während des Verfahrensschritts (d) zumindest teilweise von Kunststoff umspritzt wird.

8. Elektrische oder elektronische Baugruppe (19), umfassend eine elektrische oder elektronische Funktionseinheit, insbesondere eine Statoreinheit (23), ein Leiterelement (2') und eine Kunststoffstruktur (28), mit den folgenden Merkmalen:
- das Leiterelement (2') weist zwei Kontaktstellen (5) und einen zwischen diesen angeordneten, durch eine Mehrzahl von Umfangsflächen (7) begrenzten Längsabschnitt (6) auf;
- die elektrische oder elektronische Funktionseinheit ist mit dem Leiterelement (2') kontaktiert;
- das Leiterelement (2') weist auf allen Umfangsflächen (7) eines sich innerhalb des Längsabschnitts (6) erstreckenden Texturierungsabschnitts (8) rillenförmige Vertiefungen (9) auf, wobei
∘ sich eine Vielzahl der rillenförmigen Vertiefungen (9.I) ununterbrochen durchgehend in mindestens zwei aneinander angrenzende, eine gemeinsame Kante (10.I) ausbildende primäre Umfangsflächen (7.I) hineinerstreckt und
∘ eine der primären Umfangsflächen (7.I) und eine weitere, sekundäre Umfangsfläche (7.II) des Leiterelements (2') unter Ausbildung einer Kante (11, 12) aneinandergrenzen und sich in Querschnittsansicht in einem Winkel kleiner oder gleich 90° schneiden, wobei sich die rillenförmigen Vertiefungen (9.I, 9.II) der primären und der sekundären Umfangsfläche (7.I, 7.II) in Querschnittsansicht überlappen;
- die Kunststoffstruktur (28) umhüllt zumindest teilweise die elektrische oder elektronische Funktionseinheit und ist fest mit dem Leiterelement (2') verbunden, indem sie dieses innerhalb eines dessen Längsabschnitt (6) überlappenden Umspritzabschnitts (29) entlang des gesamten Umfangs umhüllt, wobei sich die Kunststoffstruktur (28) in die von ihr überdeckten rillenförmigen Vertiefungen (9) des Leiterelements (2') hinein erstreckt.

9. Elektrische oder elektronische Baugruppe (16) nach Anspruch 8, **dadurch gekennzeichnet, dass** die Funktionseinheit als Statoreinheit (23) und die Baugruppe als Statorstruktur (18) einer Motor-Pumpen-Einheit ausgeführt ist, wobei die Motor-Pumpen-Einheit eine Rotoreinheit (20) umfasst und geeignet ist ein Fluid zu fördern, wobei die Statoreinheit (23) nur teilweise von der Kunststoffstruktur (28) umhüllt ist und in einem der Rotoreinheit (20) zugewandten Bereich freiliegt, wobei dieser freiliegende Bereich der Statoreinheit (23) sowie die Rotoreinheit (20) dem geförderten Fluid ausgesetzt sind.

## Claims

1. Method for manufacturing an electrical or electronic component part, which comprises a conductor element (2') and a plastic structure (28), wherein the conductor element (2') has two contact points (5) and a longitudinal portion (6) disposed between them and bounded by a multiplicity of peripheral faces (7) and wherein further the plastic structure (28) is bonded securely to the conductor element (2') in such a way that it encapsulates this within an overmolded portion (29) overlapping its longitudinal portion (6) along the entire periphery, with the following method steps:
(a) providing a strip-like metal substrate (1) comprising a plurality of conductor element blanks (2) and a carrier structure (4) joining these with one another;
(b) making, by means of one or two laser light sources (13), groove-like depressions (9) on all peripheral faces (7) of the conductor element blanks (2), respectively on a texturing portion (8) extending within the longitudinal portion (6) of the subsequent conductor element (2'), wherein
- by means of one single laser light source (13), the groove-like depressions (9.I) are made on at least two primary peripheral faces (7.I) adjoining one another and forming a common edge (10.I), in such a way that a plurality of the groove-like depressions (9.I) extends in uninterrupted continuous manner into the at least two primary peripheral faces (7.I), and
- one of the primary peripheral faces (7.I) and one further, secondary peripheral face (7.II) of the conductor element (2') adjoin one another with formation of an edge (11, 12) and intersect at an angle smaller than or equal to 90° in cross-sectional view, wherein the groove-like depressions (9.I, 9.II) of the primary and of the secondary peripheral faces (7.I, 7.II) overlap one another in cross-sectional view;
(c) separating a conductor element blank (2) machined in method step (b) by detaching it from the carrier structure (4), especially by stamping;
(d) overmolding the conductor element (2) obtained from method step (c) within the overmolding portion (29) on all peripheral faces (7) with plastic to form the plastic structure (28), wherein the plastic of the plastic structure (28) extends into the groove-like depressions (9), covered by it, of the conductor element (2).

2. Method for manufacturing an electrical or electronic component part according to claim 1, **characterized in that** the groove-like depressions (9) have a depth of 5 um to 50 um and a width of 5 um to 40 um.

3. Method for manufacturing an electrical or electronic component part according to claim 2, **characterized in that** the groove-like depressions (9) have a depth of 20 um to 30 um and a width of 15 um to 25 um.

4. Method for manufacturing an electrical or electronic component part according to at least one of the preceding claims, **characterized in that** the conductor element (2') has, in the texturing portion (8), a cross section having parts with the shape of a polygon, of a circular arc or of both a polygon and a circular arc.

5. Method for manufacturing an electrical or electronic component part according to at least one of the preceding claims, **characterized in that** the groove-like depressions (9) are part of a net-like or grid-like groove structure that has longitudinal and transverse grooves.

6. Method for manufacturing an electrical or electronic component part according to at least one of the preceding claims, **characterized in that** the groove-like depressions (9) are made one after the other in method step (b) on all peripheral faces (7) of the texturing portion (8) of the conductor element blank (2) by means of only one laser light source (13), wherein the strip-like metal substrate (1) is guided in the manner of a twisted ribbon so that the respective conductor element blank (2) is guided one time with its primary peripheral faces (7.I) and one time with its other, secondary peripheral faces (7.II) past the laser light source (13) and turned toward it.

7. Method for manufacturing an electrical or electronic component part according to at least one of the preceding claims, **characterized in that** the conductor element (2') obtained from method step (c) is contacted at at least one of its contact points (5) with an electrical or electronic functional unit, which is overmolded at least partly with plastic during method step (d).

8. Electrical or electronic assembly (19), comprising an electrical or electronic functional unit, especially a stator unit (23), a conductor element (2') and a plastic structure (28), having the following features:
- the conductor element (2') has two contact points (5) and a longitudinal portion (6), which is disposed between them and bounded by a multiplicity of peripheral faces (7);
- the electrical or electronic functional unit is contacted with the conductor element (2');
- the conductor element (2') has, on all peripheral faces (7) of a texturing portion (8) extending within the longitudinal portion (6), groove-like depressions (9), wherein
- a plurality of the groove-like depressions (9.I) extends in uninterrupted continuous manner into at least two peripheral faces (7.I) adjoining one another and forming a common edge (10.I);
- one of the primary peripheral faces (7.I) and one further, secondary peripheral face (7.II) of the conductor element (2') adjoin one another with formation of an edge (11, 12) and intersect at an angle smaller than or equal to 90° in cross-sectional view, wherein the groove-like depressions (9.I, 9.II) of the primary and of the secondary peripheral faces (7.I, 7.II) overlap one another in cross-sectional view;
- the plastic structure (28) at least partly encapsulates the electrical or electronic functional unit and is bonded securely to the conductor element (2'), in that it encapsulates this within an overmolding portion (29) overlapping its longitudinal portion (6) along the entire periphery, wherein the plastic structure (28) extends into the groove-like depressions (9), covered by it, of the conductor element (2').

9. Electrical or electronic assembly (16) according to claim 8, **characterized in that** the functional unit is designed as a stator unit (23) and the assembly as the stator structure (18) of a motor-pump unit, wherein the motor-pump unit comprises a rotor unit (20) and is suitable for conveying a fluid, wherein the stator unit (23) is encapsulated only partly by the plastic structure (28) and is uncovered in a region turned toward the rotor unit (20), wherein this bare region of the stator unit (23) as well as the rotor unit (20) is exposed to the conveyed fluid.

## Revendications

1. Procédé de fabrication d'un composant électrique ou électronique, lequel comprend un élément conducteur (2') et une structure en matière plastique (28), sachant que l'élément conducteur (2') comportent deux points de contact (5) et une section longitudinale (6) disposée entre ceux-ci, limitée par une pluralité de surfaces périphériques (7) et sachant qu'en plus la structure en matière plastique (28) est reliée fermement à l'élément conducteur (2') de telle sorte qu'elle enveloppe celui-ci à l'intérieur d'une section surmoulée par injection (29) chevauchant la section longitudinale (6) de celui-ci le long de toute la périphérie, avec les étapes de procédé suivantes :
(a) préparation d'un substrat métallique en forme de bande (1), comprenant une pluralité d'ébauches d'élément conducteur (2) et une structure porteuse (4) reliant celles-ci entre elles,
(b) fabrication de cavités en forme de rainures (9) sur toutes les surfaces périphériques (7) des ébauches d'élément conducteur (2) respectivement sur une section de texture (8) s'étendant à l'intérieur de la section longitudinale (6) de l'élément conducteur suivant (2') à l'aide d'une ou de deux sources de lumière de laser (13),
sachant
- qu'à l'aide d'une source de lumière de laser unique (13), les cavités en forme de rainures (9.1) sont fabriquées sur au moins deux surfaces périphériques primaires (7.1) contigües formant un bord commun (10.I) de telle sorte qu'une pluralité de cavités en forme de rainures (9.1) s'étend sans interruption en continu dans au moins deux surfaces périphériques (17.1) primaires, et
- une des surfaces périphériques primaires (7.1) et une autre surface périphérique secondaire (7.II) de l'élément conducteur (2') sont contigües en formant un bord (11, 12) et se coupent vues en section transversale dans un angle inférieur ou égal à 90°, sachant que les cavités en forme de rainures (9.1, 9.II) de la surface périphérique primaire et de la surface périphérique secondaire (7.1, 7.11) se chevauchent vues en section transversale,
(c) séparation d'une ébauche d'élément conducteur (2) élaborée dans l'étape de procédé (b) par détachement de celle-ci de la structure porteuse (4), en particulier par estampage,
(d) surmoulage par injection de l'élément conducteur (2) résultant de l'étape de procédé (c) à l'intérieur de la section surmoulée par injection (29) sur toutes les surfaces périphériques (7) avec de la matière plastique en formant la structure en matière plastique (28), sachant que la matière plastique de la structure en matière plastique (28) s'étend dans les cavités en forme de rainures (9) de l'élément conducteur (2) recouvertes par celle-ci.

2. Procédé de fabrication d'un composant électrique ou électronique selon la revendication 1, **caractérisé en ce que** les cavités en forme de rainures (9) comportent une profondeur de 5 µm à 50 µm et une largeur de 5 µm à 40 µm.

3. Procédé de fabrication d'un composant électrique ou électronique selon la revendication 2, **caractérisé en ce que** les cavités en forme de rainures (9) comportent une profondeur de 20 µm à 30 µm et une largeur de 15 µm à 25 µm.

4. Procédé de fabrication d'un composant électrique ou électronique selon au moins l'une quelconque des revendications précédentes, **caractérisé en ce que** l'élément conducteur (2') comporte une section transversale présentant dans la section de texture (8) des parties polygonales, en forme d'arc de cercle ou des parties tant polygonales qu'en arc de cercle.

5. Procédé de fabrication d'un composant électrique ou électronique selon au moins l'une quelconque des revendications précédentes, **caractérisé en ce que** les cavités en forme de rainures (9) font partie d'une structure rainurée de type réticulaire ou de grille, qui comporte des rainures longitudinales et transversales.

6. Procédé de fabrication d'un composant électrique ou électronique selon au moins l'une quelconque des revendications précédentes, **caractérisé en ce que** les cavités en forme de rainures (9) sont fabriquées dans l'étape de procédé (b) l'une après l'autre sur toutes les surfaces périphériques (7) de la section de texture (8) de l'ébauche d'élément conducteur (2) à l'aide d'une seule source de lumière de laser (13), sachant que le substrat métallique en forme de bande (1) est guidé tourné en forme de boucle de telle sorte que l'ébauche d'élément conducteur respective (2) est passée devant la source de lumière de laser (13), une fois avec ses surfaces périphériques primaires (7.1) et une fois avec ses autres surfaces périphériques (7.11) tournées vers celle-ci.

7. Procédé de fabrication d'un composant électrique ou électronique selon au moins l'une quelconque des revendications précédentes, **caractérisé en ce que** l'élément conducteur (2') résultant de l'étape de procédé (c) est en contact sur au moins un de ses points de contact (5) avec une unité fonctionnelle électrique ou électronique, laquelle est surmoulée par injection au moins en partie par de la matière plastique pendant l'étape de procédé (d).

8. Ensemble électrique ou électronique (19), comprenant une unité fonctionnelle électrique, en particulier une unité de stator (23), un élément conducteur (2') et une structure en matière plastique (28), avec les caractéristiques suivantes :
- l'élément conducteur (2') comporte deux points de contact (5) et une section longitudinale (6) disposée entre ceux-ci, limitée par une pluralité de surfaces périphériques (7),
- l'unité fonctionnelle électrique ou électronique est en contact avec l'élément conducteur (2'),
- l'élément conducteur (2') comporte des cavités en forme de rainures (9) sur toutes les surfaces périphériques (7) d'une section de texture (8) s'étendant à l'intérieur de la section longitudinale (6), sachant
∘ qu'une pluralité de cavités en forme de rainures (9.1) s'étend sans interruption en continu dans au moins deux surfaces périphériques (7.1) primaires voisines l'une de l'autre, constituant un bord commun (10.1) et
∘ une des surfaces périphériques primaires (7.1) et une autre surfaces périphérique secondaire (7.II) de l'élément conducteur (2') sont contigües en formant un bord (11, 12) et se coupent vues en section transversale dans un angle inférieur ou égal à 90°, sachant que les cavités en forme de rainures (9.1, 9.II) de la surface périphérique primaire et de la surface périphérique secondaire (7.1, 7.11) se chevauchent vues en section transversale,
- la structure en matière plastique (28) enveloppe au moins en partie l'unité fonctionnelle électrique ou électronique et est reliée fermement à l'élément conducteur (2') en enveloppant celui-ci à l'intérieur d'une section surmoulée par injection (29) chevauchant la section longitudinale (6) de celui-ci le long de toute la périphérie, sachant que la structure en matière plastique (28) s'étend dans les cavités en forme de rainures (9) de l'élément conducteur (2') recouvertes par elle.

9. Ensemble électrique ou électronique (16) selon la revendication 8, **caractérisé en ce que** l'unité fonctionnelle est exécutée comme unité de stator (23) et l'ensemble comme structure de stator (18) d'une unité moteur-pompe, sachant que l'unité moteur-pompe comprend une unité de rotor (20) et est adaptée pour transporter un fluide, sachant que l'unité de stator (23) n'est que partiellement enveloppée par la structure en matière plastique (28) et est dégagée dans une zone tournée vers l'unité de rotor (20), sachant que cette zone dégagée de l'unité de stator (23) ainsi que l'unité de rotor (20) sont exposées au fluide véhiculé.
